# EUROPEAN PATENT APPLICATION

(11) **EP 1 000 549 A2**
(43) Date of publication of application: **17.05.2000**
(21) Application number: 99118767.5
(22) Date of filing: 23.09.1999
(51) Int. Cl.: A23G 3/20, A23G 3/02, A23G 3/00

(54) **Chain mold for making soft-centred sweets**

(30) Priority: 19.10.1998 IT MI982236
(71) Applicant: NUOVA EUROMEC S.r.l., 24057 Martinengo (Bergamo) (IT)
(72) Inventor: Rizzi, Mario, 24057 Martinengo (Bergamo) (IT)
(74) Representative: Cicogna, Franco

(57) **Abstract**

The invention relates to a chain mold for making soft-centred sweets, comprising a first supporting construction which supports horizontal-parallel rotary axis shafts, each shaft supporting a plurality of gear wheels respectively meshing with a first top chain and a bottom chain, and where the first bottom chain is provided with bottom half-molds adapted to engage with corresponding top half-molds of the top chain for forming the soft-centred sweets starting from a food product rib supplied in parallel with the chains. The main feature of the invention is that the mold further comprises a second supporting construction, provided with a pair of shoulders supporting a shaft and an axis substantially parallel to one another and thereon a second top chain is engaged, said second top chain being provided with dihedral constructions which are so contoured as to provide, for each sweet, the soft filling holding volume.

## Description

### BACKGROUND OF THE INVENTION

The present invention relates to a chain mold for making soft-centred sweets.

Machines for making food products, such a soft-centred sweets, in which a plurality of pairs of punches cooperating with one another are designed for forming the single sweet pieces are well known.

In particular, the individual sweet pieces are formed starting from a continuous food rib or strip, which is conventionally made by an extruding method.

More specifically, the pairs of hollow punches of said machines are assembled on a top chain therewith is tangentially engaged a bottom chain, said bottom chain supporting corresponding cutter elements which, by engaging with corresponding elements provided on the top chain, cut the food product rib into pieces having a length corresponding to the cutter element pitch.

The above mentioned machines are disclosed, for example, in the Italian patent application No. MI 21356 A/88 filed on July 13,1988 and having for title "Stampo perfezionato a catene, per la produzione di caramelle dure e ripiene" (An improved chain mold for making hard and soft-centred sweets) to which is herein made reference, said machine allowing to make filled food products, which can have several different threedimensional shapes depending on the types and shapes of the used making punches.

On the other hand, considering that the soft-centred sweets are conventionally made starting from a food product rib having a temperature greater than the room temperature and including the filling in its inside, the made sweets can be affected by several drawbacks, the main of which is a full or partial overflow of the filling therefrom.

This problem, in particular, is due to the high making speed conventionally required for meeting modern industrial standards.

### SUMMARY OF THE INVENTION

Accordingly, the aim of the present invention is to provide such a chain mold for making soft-centred sweets allowing to quickly make the soft-centred sweets while preventing the filling thereof from exiting the sweet bodies.

Within the scope of the above mentioned aim, a main object of the present invention is to provide such a soft-centred sweet making mold which is specifically adapted to meet modern industrial making requirements.

Another object of the present invention is to provide such a chain mold for making soft-centred sweets which is very reliable and safe in operation.

According to one aspect of the present invention, the above mentioned aim and objects, as well as yet other objects, which will become more apparent hereinafter, are achieved by a chain mold for making soft-centred sweets, comprising a first supporting construction supporting thereon a plurality of shafts having horizontal and parallel rotary axes, on each said shaft being assembled a plurality of gear wheels meshing respectively with a first top chain and a bottom chain, wherein said first bottom chain is provided with bottom half-molds designed for engaging with corresponding top half-molds of said top chain to form said soft-centred sweets, starting from a food product rib supplied in parallel with said chains, characterized in that said chain mold further comprises a second supporting construction, provided with a pair of shoulders supporting a shaft and an axis, which are substantially parallel to one another, and thereon is engaged a second top chain provided with dihedral constructions which are so contoured as to form, for each said soft-centred sweet, a filling holding volume therefor.

According to a preferred embodiment of the present invention, the bottom chain is extended with respect to the first top chain to allow the second top chain to be housed and engaged thereby.

According to a further preferred embodiment of the present invention, the second top chain supporting construction is arranged upstream of the first top chain.

According to yet another preferred embodiment of the present invention, the dihedral constructions pertaining to the second top chain are so designed as to present a plurality of knives having a side size greater than that of corresponding knives pertaining to the dihedral constructions of the bottom chain.

Moreover, the dihedral constructions pertaining to the second top chain are provided with a first and second surfaces, adjoining one another and having a curved profile, so as to define the side profile and size of a respective knife.

### BRIEF DESCRIPTION OF THE DRAWINGS

Further advantages and characteristics of the present invention will become more apparent hereinafter from the following detailed description, given by way of an illustrative but not limitative example, with reference to the accompanying drawings, where:
Figure 1 is a schematic side view of the chain mold for making soft-centred sweets according to the present invention;

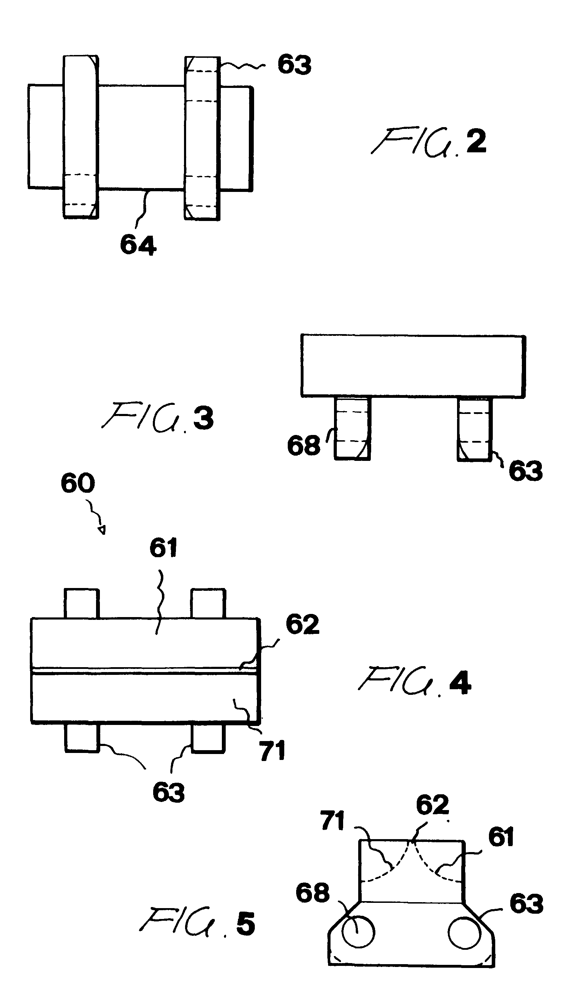

Figure 2 is a bottom view of an element having a dihedral construction and pertaining to the second top chain of the chain mold according to the present invention;
   and
Figures 3, 4 and 5 are further different views of the element shown in Figure 2.

### DESCRIPTION OF THE PREFERRED EMBODIMENTS

In the following disclosure reference will be made to some preferred embodiments of the present invention, which have been illustrated as a not limitative example of possible variations of the invention.

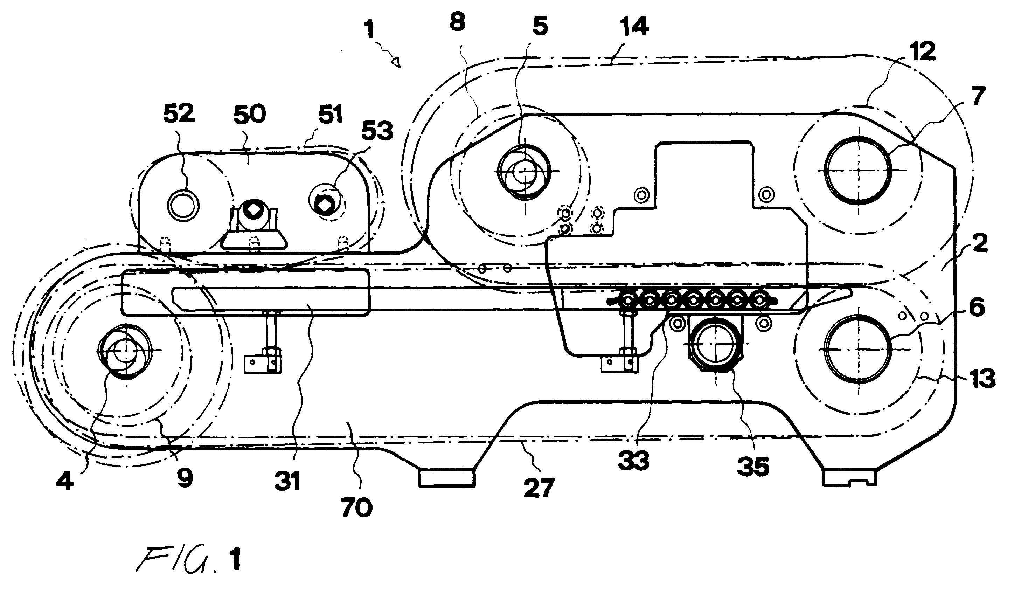

Figure 1 clearly shows a chain mold specifically designed for making soft-centred sweets, according to the present invention, and which has been generally indicated by the reference number 1.

In this connection it should be pointed out that the chain mold according to the present invention has been specifically designed for assembling, upon slight modifications, on sweet making machines like those disclosed in the above mentioned Italian patent application, herein incorporated by reference with respect to the prior art status, the main components and parts of the machines being disclosed in said Italia patent application.

The chain mold according to the present invention comprises a first supporting construction 2 which supports horizontal and parallel rotary axis shafts, respectively indicated by the reference numbers 5, 7 and 4, 6.

On each said shaft 5, 7 and 4, 6 a plurality of gear wheels 8, 12 and 9, 13 respectively meshing with a first top chain 14 and a bottom chain 27 are assembled.

The shoulders of the supporting construction are provided with extensions 70 specifically designed for supporting the rotary axis 4 thereon is assembled the gear wheel 9 of the bottom chain 27.

The bottom chain 27, in particular, is provided with a plurality of bottom half-molds adapted to engage with corresponding top half-molds pertaining to the first top chain 14.

The bottom half-molds and top half-molds cooperate with one another to make the mentioned soft-centred sweets, starting from a food product rib or strip which is supplied or fed in parallel with said chains 27 and 14.

The chain mold 1 further comprises a second supporting construction 50 which includes a pair of shoulders supporting thereon a shaft 52 and an axis 53, which are substantially parallel to one another and thereon a second top chain 51 is engaged.

The second top chain 51 is in turn provided with a plurality of dihedral constructions which have been designed for forming, for each sweet, a filling holding volume therefor.

The bottom chain 27 is extended with respect to the first top chain 14 to allow the second top chain 51 to be housed and engaged thereby.

Moreover, the second top chain 51 supporting construction 50 is arranged upstream of the first top chain 14.

The second top chain 51 is provided with a plurality of dihedral constructions 60, so designed as to include a plurality of knives 62 having a side size larger than that of the knives pertaining of the dihedral constructions of the bottom chain 27.

Said dihedral constructions 60, pertaining to said top chain 51, are provided with a body 64 including a first and second surfaces, respectively indicated by the reference numbers 61 and 71, adjoining one another and having a curved profile, so as to define the profile and side size of the knife 62.

Said dihedral constructions are moreover provided with legs 63 including holes 68 for engaging with the elements of the second top chain 51.

The chain mold of the invention is moreover provided with bilateral pressing cams 31, associated with sealed ball bearings 33, designed for facilitating the cutting of the food product rib or strip.

Furthermore, the height position of the bilateral cams 31 can be adjusted by an outer wheel 35, depending on the operating requirements.

The disclosed chain mold, owing to the provision of the knives 62 of the second top chain 51, which have a side size larger than that of the knives of the dihedral constructions of the bottom chain 27, is adapted to make the soft-centred sweets while preventing the filling thereof from exiting the sweet body.

In particular, the top knives 62, by overlapping the bottom knives of thinner thickness, will allow to press the food product rib or strip so as to provide holding pockets having a thickness adapted to hold therein the sweet filling.

Thus, the chain mold according to the present invention will allow to easily make soft centred sweets with a very high production rate, meeting modern industrial requirements.

## Claims

1. A chain mold for making soft-centred sweets, comprising a first supporting construction supporting shafts having horizontal and parallel rotary axes, on each said shaft being assembled a plurality of gear wheels meshing respectively with a first top chain and a bottom chain and wherein said first bottom chain is provided with a plurality of bottom half-molds adapted to engage with corresponding top half-molds of said top chain to form said soft-centred sweets, starting from a food product rib supplied in parallel with said chains, characterized in that said chain mold comprises moreover a second supporting construction, provided with a pair of shoulders supporting a shaft and an axis, which are substantially parallel to one another, and thereon is engaged a second top chain including a plurality of dihedral constructions which are designed to form, for each said soft centred sweet, a filling holding volume therefor.

2. A chain mold for making soft-centred sweets, according to Claim 1, characterized in that said bottom chain is extended with respect to said first top chain, thereby allowing said second top chain to be housed and engaged thereby.

3. A chain mold for making soft-centred sweets, according to Claim 1 or 2, characterized in that said supporting construction of said second top chain is arranged upstream of said first top chain.

4. A chain mold for making soft-centred sweets, according to Claim 1 or 2, characterized in that said dihedral constructions pertaining to said second top chain include therein a plurality of knives having a side size larger than that of corresponding knives pertaining to the dihedral constructions of said bottom chain.

5. A chain mold for making soft-centred sweets, according to Claim 4, characterized in that said dihedral constructions of said second top chain are provided with a first and a second surface, adjoining one another and having a curved profile, so as to define a profile and side size of a said knife.

6. A chain mold for making soft-centred sweets, according to one or more of the preceding Claims, characterized in that said chain mold comprises moreover pressing bilateral cams including sealed ball bearings for facilitating the cutting of said food product rib.

7. A chain mold for making soft-centred sweets, according to Claim 6, characterized in that said mold comprises moreover an outer wheel for changing the height position of said bilateral cams.

8. A chain mold for making soft-centred sweets, according to one or more of the preceding Claims, and substantially as broadly disclosed and for the intended aim and objects.
